# EUROPEAN PATENT SPECIFICATION

(11) **EP 4 137 299 B1**
(45) Date of publication and mention of the grant of the patent: **22.05.2024**
(21) Application number: 22191057.3
(22) Date of filing: 18.08.2022
(51) Int. Cl.: B29C 70/46, B29C 33/22

(54) **MOLD FOR CARBON FIBER COMPOSITE MATERIAL**
FORM FÜR KOHLENFASERVERBUNDSTOFF
MOULE POUR MATÉRIAU COMPOSITE EN FIBRE DE CARBONE

(30) Priority: 18.08.2021 TW 110130470
(43) Date of publication of application: 22.02.2023
(73) Proprietor: FORMOSA PLASTICS CORPORATION, Kaohsiung City (TW)
(72) Inventor: OU, Chih-Hsuan, Kaohsiung City (TW); CHOU, Chien-Hsu, Kaohsiung City (TW); HWANG, Long-Tyan, Kaohsiung City (TW)
(74) Representative: Lang, Christian

(56) References cited:
- EP-A1- 0 344 721
- EP-B1- 0 891 249

## Description

### BACKGROUND

### Field of Invention

The present application relates to a mold. More particularly, the present application provides a mold for conveniently producing carbon fiber composite materials with various thicknesses.

### Description of Related Art

In order to meet the requirements of various applications, the research of material technology has been rapidly developed. However, the requirements of material properties are tending to be severe as the developments of the applications. Accordingly, composite materials that blend various materials to combine properties of the materials are vigorously developed. Because carbon fiber materials have light weight and good mechanical properties (such as strength, modulus and like), they are often used as a reinforcing material for the composite materials.

The composite materials are generally produced by compression molding. Based on requirements of dimensional accuracy, a mold for the compression molding is preferably a metal mold. As the requirements (such as loading, supporting, pushing and/or the like) of the applications are varied, configuration designs of components are often adjusted frequently during the development. However, it is necessary to cost a lot of money and time for the preparation of the metal mold. Therefore, R&D engineers dare not prepare the required mold before the designed configuration of the mold is not confirmed whether it meets the requirements or not, such that the development is affected.

EP 0 891 249 B1 describes a mold for a carbon fiber composite material configured to fabricate carbon fiber composite material. As shown in Fig. 3G of EP 0 891 249 B1, the mold assembly comprises a first mold, a second mold and a frame mold defining the molding space. Protruding portions are provided to protrude into the closing space defined by the frame mold. Stopping molds are disposed between the first mold and the frame mold pressed against the flange and the top surface of the frame mold. Accordingly, there is an urgent need to provide a mold for a carbon fiber composite material for improving the defects that the conventional mold is not applicable to fabricate the carbon fiber composite materials with various dimensional specifications.

### SUMMARY

Therefore, an aspect of the present application is to provide a mold for a carbon fiber composite material. The mold for the carbon fiber composite material is applicable to fabricate the carbon fiber composite materials with various thicknesses by disposing stopping molds.

The mold for a carbon fiber composite of the present application is defined in claim 1.

The mold is configured to fabricate the carbon fiber composite material. The mold comprises a first mold, a second mold, a frame mold and a plurality of stopping molds. The first mold has a flange and a first protruding portion. The second mold has a second protruding portion. The frame mold is disposed between the first mold and the second mold. An enclosing space is defined by the frame mold. The first protruding portion and the second protruding portion protrude into the enclosing space, and a surface of the first protruding portion and a surface of the second protruding portion contact with an inner wall of the frame mold. The stopping molds are disposed between the first mold and the frame mold, and the stopping molds are pressed against the flange and a top surface of the frame mold. The first mold, the second mold and the frame mold define a molding space, and the molding space is configured to contain at least one carbon fiber prepreg material wherein a sum of a protruding distance of the first protruding portion and a protruding distance of the second protruding portion is equal to a height of the frame mold.

According to some embodiments of the present application, the stopping molds have a same height.

According to some embodiments of the present application, a height of the stopping molds is less than a protruding distance of the first protruding portion.

According to some embodiments of the present application, the frame mold has a flow channel, at least one drainage opening is disposed on the inner wall of the frame mold, and the flow channel connects to the at least one drainage opening. According to some embodiments of the present application, the flow channel is lower than each of the at least one drainage opening based on a bottom surface of the frame mold.

According to some embodiments of the present application, at least one discharging opening is disposed on an outer wall of the frame mold, and the flow channel connects to each of the at least one discharging opening.

According to some embodiments of the present application, a resin content of the carbon fiber composite material is less than a total resin content of the at least one carbon fiber prepreg material, and a resin outflow rate of the carbon fiber composite material is greater than 0% and less than or equal to 5%.

According to some embodiments of the present application, the frame mold is a square frame.

According to some embodiments of the present application, a deviation of a dimensional accuracy of the carbon fiber composite material is less than 4%, and based on a volume of the carbon fiber composite material as 100 vol%, a fiber content of the carbon fiber composite material is 53 vol% to 63 vol%.

In the mold for the carbon fiber composite material of the present application, the stopping molds are disposed between the top mold and the frame mold, thereby subjecting the thickness of the carbon fiber composite material to be corresponded to the height of the stopping molds, and therefore the requirements of the back-end applications can be met. Moreover, the flow channel is disposed in the frame mold to contain the excess resin materials squeezed during the hotpressing process, further facilitating to improve the bonding properties between the carbon fibers and the resin matrix, and therefore physical properties and mechanical strength of the carbon fiber composite material can be enhanced. Based on the configuration of the flow channel, orientations of the carbon fibers are not affected by the excess resin materials squeezed from the carbon fiber prepreg. Therefore, the reinforced efficacy of the carbon fibers to the resin matrix can be maintained, and further the carbon fiber composite material has excellent properties. Accordingly, the mold of the present application contributes to efficiently reduce the mold development cost, shorten the mold development time and increase the development speed.

### BRIEF DESCRIPTION OF THE DRAWINGS

The invention can be more fully understood by reading the following detailed description of the embodiment, with reference made to the accompanying drawings as follows:

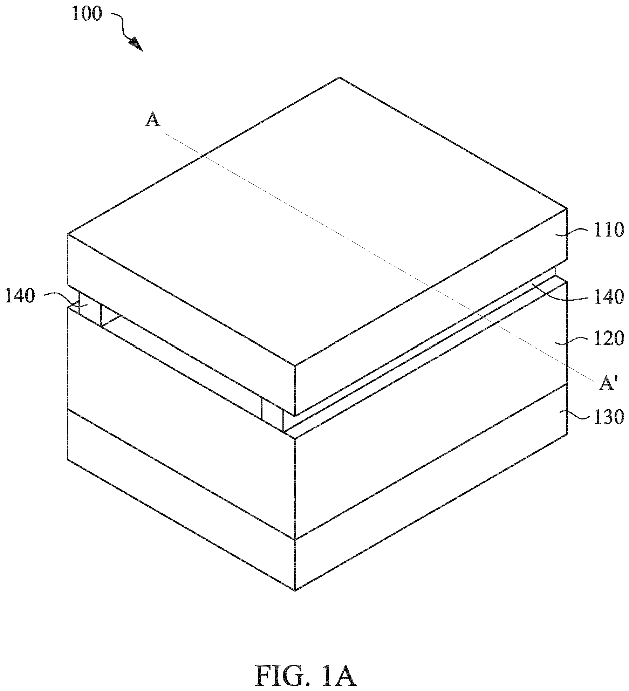

FIG. 1A illustrates a three-dimensional schematic diagram of a mold for a carbon fiber composite material according to the present application.

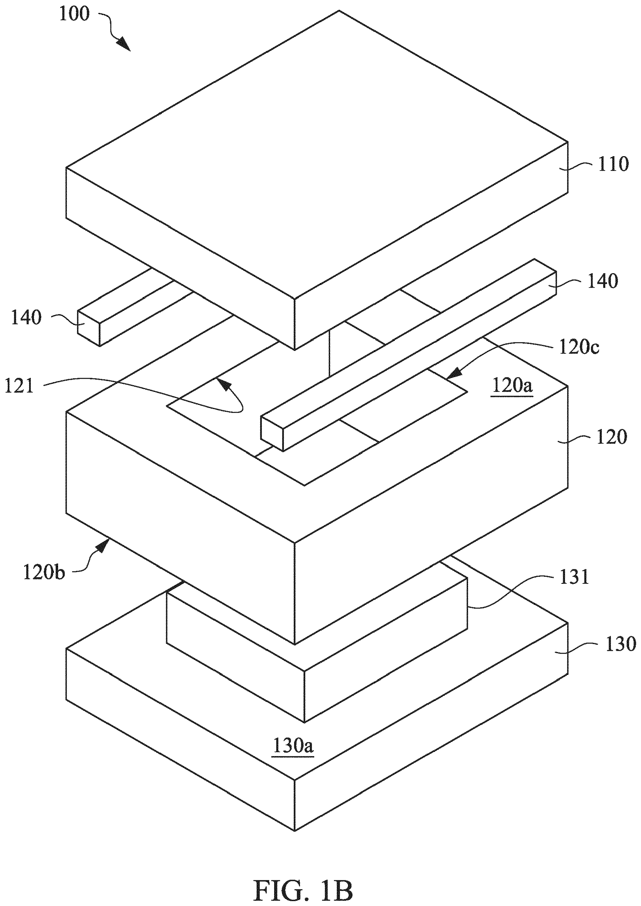

FIG. 1B illustrates a schematic exploded diagram of a mold of a carbon fiber composite material according to the present application.

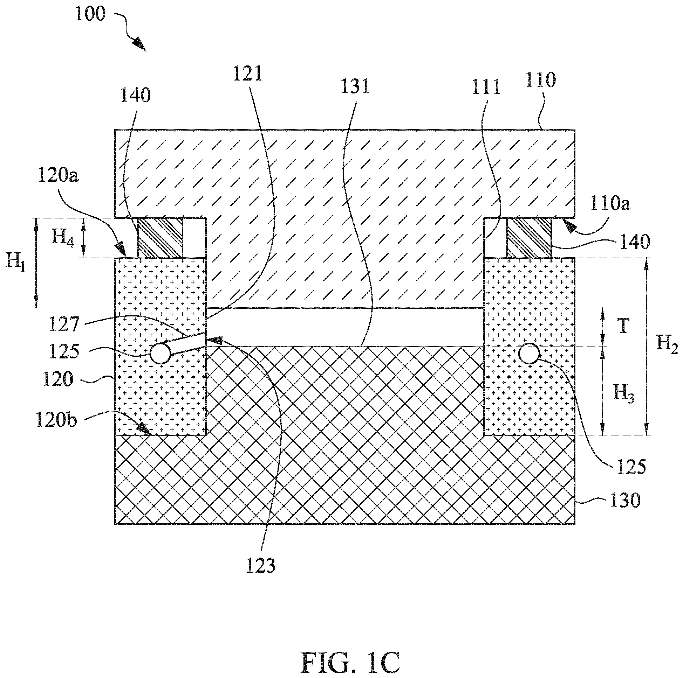

FIG. 1C illustrates a schematic cross-sectional diagram of a mold for a carbon fiber composite material along line A-A' of FIG. 1A.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

Referring to FIG. 1A to FIG. 1C simultaneously. FIG. 1A illustrates a three-dimensional schematic diagram of a mold for a carbon fiber composite material according to the present application, FIG. 1B illustrates a schematic exploded diagram of a mold of a carbon fiber composite material according to the present application, and FIG. 1C illustrates a schematic cross-sectional diagram of a mold for a carbon fiber composite material along line A-A' of FIG. 1A. The mold 100 of the present application comprises a top mold 110, a bottom mold 130, a frame mold 120 and a plurality of stopping molds 140.

The top mold 110 includes a flange 110a and a protruding portion 111, and the bottom mold 130 includes a flange 130a and a protruding portion 131. The top mold 110 and the bottom mold 130 recited in the present application are only distinguished for the purpose of clear description, but there is no significant difference between them. In some embodiments, they can be replaced with each other. The protruding portion 111 of the top mold 110 has a protruding distance H₁, and the protruding distance H₁ is measured from a bottom surface of the flange 110a. Similarly, the protruding portion 131 of the bottom mold 130 has a protruding distance H₃.

The frame mold 120 is disposed between the top mold 110 and the bottom mold 130, and the frame mold 120 is composed of a plurality of frame bars. An enclosing space 120c of the frame mold 120 is defined by the frame bars. In the present application, the protruding portions 111 and 131 of the top mold 110 and the bottom mold 130 can protrude into the enclosing space 120c, and side surfaces of the protruding portions 111 and 131 both contact with an inner wall 121 of the frame mold 120. The frame mold 120 has a height H₂, and a sum of the protruding distance H₁ and the protruding distance H₃ is equal to the height H₂ of the frame mold 120.

Referring to FIG. 1C. A flow channel 125 is disposed in an interior of the frame mold120, and at least one drainage opening 123 is disposed on the inner wall 121. The drainage opening 123 connects to the flow channel 125 through a flow channel 127. In some embodiments, a configuration of the flow channel 127 is not limited to that illustrated in FIG. 1C based on conditions of a process of the mold 100, but it is necessary that the flow channel 127 connects to the drainage opening 123 and the flow channel 125. In order to achieve a better drainage effect, the flow channel 125 is arranged along the frame bars of the frame mold 120, and the flow channels 125 in each of the frame bars are connected to each other. Moreover, a height of the drainage opening 123 is not lower than a top surface of the protruding portion 131 (i.e. the drainage opening 123 is not blocked by the side surface of the protruding portion 131) when the protruding portion 131 of the bottom mold 130 protrudes into the enclosing space 120c. Besides, the flow channel 125 is not higher than each of the drainage openings 123 with a reference of the bottom surface 120b of the frame mold 120, and preferably the flow channel 125 is lower than the drainage openings 123.

Although a discharging opening is not illustrated in the drawings, at least one discharging opening is selectively disposed on an outer surface of the frame mold 120, in some embodiments. Similar to the drainage opening 123, the discharging openings respectively connect to the flow channel 125 through connecting flow channels such as the flow channel 127 to discharge liquids from the mold 100. A disposing height of the discharging openings is not higher than that of the flow channel 125. Preferably, the disposing height of the discharging openings is lower than that of the flow channel 125 for achieving better discharging effect.

Referring to FIG. 1A to FIG. 1C. The stopping molds 140 are disposed between the top mold 110 and the frame mold 120, and each of the stopping molds 140 are pressed against the flange 110a of the top mold 110 and a top surface 120a of the frame mold 120 during a hot pressing process. Accordingly, when the hot pressing process is performed, a bottom surface of the protruding portion 111 and a top surface of the protruding portion 131 are separated by a distance due to a stopping of the stopping molds 140. It can be realized that the distance is a height H₄ of each of the stopping molds 140. In some embodiments, the stopping molds 140 have the same height to ensure that a pressing force applied during the hot pressing process is uniformly loaded by the stopping molds 140. In other embodiments, there are merely two stopping molds 140 in the mold 100 depending on the configuration of the frame mold 120. In these embodiments, the two stopping molds 140 preferably are respectively disposed on the frame bars of the frame mold 120 on opposite sides. For example, for the square frame mold 120, the two stopping molds 140 are respectively disposed on two opposite frame bars rather than two adjacent frame bars. However, the present application is not limited to the embodiments. In some embodiments, the two stopping molds 140 are respectively disposed on two adjacent frame bars based on differences of the pressing force, deigns of the frame mold 120, and /or differences of other conditions.

A molding space is defined by the protruding portion 111 of the top mold 110, the protruding portion 131 of the bottom mold 130 and the frame mold 120 with the configuration of the stopping molds 140, and the molding space can be used to contain at least one carbon fiber prepreg material (such as carbon fiber prepreg). Referring to FIG. 1A and FIG. 1B. Although a length of the stopping molds 140 is illustrated to be equal to that of the frame mold 120, the present application is not limited to this. In some embodiments, there are no specific limitations to the length and the width of the stopping molds 140 as long as the aforementioned stopping effect can be achieved and the movements of the protruding portions 111 and 131 are not affected.

Referring to FIG. 1C. In some examples, when the mold 100 of the present application is used to fabricate a carbon fiber composite material, the frame mold 120 is firstly combined with the bottom mold 130, and then a stack is disposed on the top surface of the protruding portion 131 of the bottom mold 130. The stack is obtained by laying a Teflon cloth, multi-layer carbon fiber prepreg and another Teflon cloth in sequence.

It can be realized that the frame mold 120 should have a configuration at least corresponding to the dimensions of the stack for placing the raw materials. After the stack is disposed, the stopping molds 140 are disposed on the top surface 120a of the frame mold 120, and the top mold 110 is disposed, such that the protruding portion 111 of the top mold 110 protrudes into the enclosing space 120c of the frame mold 120. In the aforementioned stage of disposing the stopping molds 140, the stopping molds 140 may have a height H₄ corresponding to a desired height of the carbon fiber composite material. The height H₄ of the stopping molds 140 is less than the protruding distance H₁ of the protruding portion 111 to prevent the protruding portion 111 from being unable to protrude into the enclosing space of the frame mold 120. A thickness of the aforementioned multi-layer carbon fiber prepreg is greater than the desired thickness of the carbon fiber composite material. For example, the top mold 110, the frame mold 120, the bottom mold 130 and the stopping molds 140 can be formed from metal materials, resin materials, gypsum materials, other suitable materials, or a combination thereof, in some examples. The top mold 110, the frame mold 120, the bottom mold 130 and the stopping molds 140 can respectively be made of the same or different materials.

Then, the mold 100 is heated, and a hot pressing force is applied to the top surface of the top mold 110 to perform a hot pressing process. The top mold 110 is gradually descended toward the bottom mold 130 by the applied got pressing force. The top mold 110 is descended until the flange 110a of the top mold 110 presses against the stopping molds 140, and therefore the thickness T of the compressed multi-layer carbon fiber prepreg (i.e. the thickness of the carbon fiber material) is equal to the height H₄ of the stopping molds 140. During the hot pressing process, resin materials in the multi-layer carbon fiber prepreg are molten due to heat energy of high temperature, such that distances between each adjacent layers are gradually reduced as the lowering of the top mold 110, and thereby excess molten resins are squeezed out between the each adjacent layers of the prepreg. The squeezed molten resins flow into the flow channel 127 and the flow channel 125 in sequence through the drainage opening 123.

Because the excess resins are squeezed, the pore defects in the carbon fiber composite material can be effectively eliminated by the hot pressing process, thereby improving bonding properties of the carbon fibers and the resin matrix. Moreover, orientations of the carbon fibers are not affected in the hot pressing process, and therefore physical properties and mechanical strength of the carbon fiber composite material can be completely exhibited. It can be realized that a content of the resin materials in the obtained carbon fiber composite material is less than a total content of the resin materials in the multi-layer carbon fiber prepreg, and a resin outflow rate of the carbon fiber composite material can be calculated with a ratio of a resin outflow amount (i.e. a difference between the total resin content and the resin content in the obtained carbon fiber composite material) and the total resin content. In some examples, the resin flow rate may be greater than 0% and less than or equal to 5%. When the resin outflow rate is greater than 0% and less than or equal to 5%, the carbon fiber composite material has better mechanical properties.

After the hot pressing process is performed, a demolding process is performed to obtain the carbon fiber composite material. In some embodiments, before the aforementioned stack is placed, a release agent can be coated on the inner wall of the mold 100 to prevent the resin materials from adhering onto the inner wall of the mold 100, thereby preventing from defects of lower efficiency of the demolding process and poor quality of the carbon fiber composite material. In some examples, the release agent can be but not limited to a water-based release agent, a solvent-type release agent, a spray-type release agent, a silicon-based release agent, a fluorine-based release agent, other suitable release agents, or a combination thereof.

In some applied examples, based on a volume of the carbon fiber material as 100 vol%, a volume of the carbon fibers is 53 vol% to 63 vol% in the carbon fiber composite material. Moreover, a deviation of a dimensional accuracy of the carbon fiber composite material can be controlled to be less than and equal to 4% with the configuration of the stopping mold. Accordingly, the mold of the present application is suitable to produce carbon fiber composite materials with various thicknesses, and the carbon fiber composite materials are equipped with excellent properties.

### Embodiment

Firstly, a release agent wad coated on a surface of a top mold, a frame mold and a bottom mold, and they are placed in an oven at 70°C. After heating was performed for 30 minutes, the bottom mold and the frame mold were configured to define a molding space, and a Teflon cloth, a stack including multi-layer carbon fiber prepreg and another Teflon cloth were sequentially placed into the molding space. And then, stopping molds with a height of 1 mm and the top mold were disposed to be subjected to a hot pressing process, and a hot pressing temperature was 150°C. After the hot pressing process was performed for 30 minutes, a demolding process was performed to obtain a carbon fiber composite material. The carbon fiber composite material had carbon fibers of 50 vol% to 63 vol%, and a thickness of the carbon fiber composite material was 0.96 mm to 1.04 mm.

According to the above description, the carbon fiber composite materials with various specifications can be fabricated with the mold of the present application by replacing the stopping molds with different heights, thereby meeting the requirements of various applications. Moreover, the excess resin materials in the carbon fiber prepreg can be discharged through the flow channel in the frame mold during the hot pressing process, and further physical properties and mechanical strength of the carbon fiber composite materials can be improved. In the mold of the present application, orientations of the carbon fibers are not affected by the squeezed of the excess resin materials from the carbon fiber prepreg, and therefore reinforced efficacy of the carbon fibers to the resin matrix can be maintained, further subjecting the obtained carbon fiber composite materials to be equipped with excellent properties. Besides, the mold of the present application can be used to fabricate the carbon fiber composite materials with excellent dimensional accuracy, thereby meeting the requirements of the back-end applications.

## Claims

1. A mold (100) for a carbon fiber composite material, configured to fabricate the carbon fiber composite material, wherein the mold (100) comprises:
a first mold (110), having a first flange (11 0a) and a first protruding portion (111);
a second mold (130), having a second protruding portion (131);
a frame mold (120), disposed between the first mold (110) and the second mold (130), an enclosing space (120c) is defined by the frame mold (120), the first protruding portion (111) and the second protruding portion (131) protrude into the enclosing space (120c), and a surface of the first protruding portion (111) and a surface of the second protruding portion (131) contact with an inner wall (121) of the frame mold (120) wherein a sum of a protruding distance (H₁) of the first protruding portion (111) and a protruding distance (H₃) of the second protruding portion (131) is equal to a height (H₂) of the frame mold (120) and
a plurality of stopping molds (140), disposed between the first mold (110) and the frame mold (120), wherein the stopping molds (140) are pressed against the first flange (110a) and a top surface (120a) of the frame mold (120), and
wherein the first mold (110), the second mold (130) and the frame mold (120) define a molding space and the molding space is configured to contain at least one carbon fiber prepreg material.

2. The mold for the carbon fiber composite material of claim 1, wherein the stopping molds (140) have a same height (H₄).

3. The mold for the carbon fiber composite material of claim 2, wherein a height (H₄) of the stopping molds (140) is less than a protruding distance (H₁) of the first protruding portion (111).

4. The mold for the carbon fiber composite material of any of claims 1-3, wherein the frame mold (120) has a flow channel (127), at least one drainage opening (123) is disposed on the inner wall (121) of the frame mold (120), and the flow channel (127) connects to the at least one drainage opening (123).

5. The mold for the carbon fiber composite material of claim 4, wherein the flow channel (127) is lower than each of the at least one drainage opening (123) based on a bottom surface (120b) of the frame mold (120).

6. The mold for the carbon fiber composite material of claim 5, wherein at least one discharging opening is disposed on an outer wall of the frame mold (120), and the flow channel (127) connects to each of the at least one discharging opening.

7. The mold (100) for a carbon fiber composite material of claim 1, wherein
the second mold (130) has a second flange (130a) and
a bottom surface (120b) of the frame mold (120) is presses against the second flange (130a).

8. The mold for the carbon fiber composite material of claim 7, wherein the stopping molds (140) have a same height (H₄), and the height (H₄) of the stopping molds (140) is less than the protruding distance (H₁) of the first protruding portion (111).

9. The mold for the carbon fiber composite material of claim 8, wherein a thickness (T) of the carbon fiber composite material is equal to the height (H₄) of each of the stopping molds (140).

10. The mold for the carbon fiber composite material of any of claims 7-9, wherein the frame mold (120) has a flow channel (127), at least one drainage opening (123) is disposed on the inner wall (121) of the frame mold (120), and the flow channel (127) connects to the at least one drainage opening (123).

11. The mold for the carbon fiber composite material of claim 10, wherein the flow channel (127) is lower than each of the at least one drainage opening (123) based on the bottom surface (120b) of the frame mold (120).

12. The mold for the carbon fiber composite material of claim 11, wherein the protruding distance (H₃) of the second protruding portion (131) is less than a height of each of the at least one drainage opening (123) based on the bottom surface (120b) of the frame mold (120).

## Patentansprüche

1. Form (100) für einen Kohlefaserverbundstoff, welche zum Herstellen des Kohlefaserverbundstoffs konfiguriert ist, wobei die Form (100) umfasst:
eine erste Form (110), welche einen ersten Flansch (110a) und einen ersten vorstehenden Abschnitt (111) aufweist;
eine zweite Form (130), welche einen zweiten vorstehenden Abschnitt (131) aufweist;
eine Rahmenform (120), die zwischen der ersten Form (110) und der zweiten Form (130) angeordnet ist, wobei ein umschlossener Raum (120c) durch die Rahmenform (120) definiert ist, wobei der erste vorstehende Abschnitt (111) und der zweite vorstehende Abschnitt (131) in den umschlossenen Raum (120c) hineinragen, und wobei eine Oberfläche des ersten vorstehenden Abschnitts (111) und eine Oberfläche des zweiten vorstehenden Abschnitts (131) mit einer Innenwand (121) der Rahmenform (120) in Kontakt stehen, wobei eine Summe einer Überstandsweite (H₁) des ersten vorstehenden Abschnitts (111) und einer Überstandsweite (H₃) des zweiten vorstehenden Abschnitts (131) gleich einer Höhe (H₂) der Rahmenform (120) ist, und
eine Vielzahl von Sperrformen (140), welche zwischen der ersten Form (110) und der Rahmenform (120) angeordnet sind, wobei die Sperrformen (140) gegen den ersten Flansch (110a) und eine Oberseite (120a) der Rahmenform (120) gedrückt sind, und
wobei die erste Form (110), die zweite Form (130) und die Rahmenform (120) einen Formgebungsraum definieren und der Formgebungsraum konfiguriert ist, um mindestens ein Kohlefaser-Prepreg-Material aufzunehmen.

2. Form für den Kohlefaserverbundstoff nach Anspruch 1, bei welcher die Sperrformen (140) eine gleiche Höhe (H₄) haben.

3. Form für den Kohlefaserverbundstoff nach Anspruch 2, bei welcher eine Höhe (H₄) der Sperrformen (140) kleiner ist als eine Überstandsweite (H₁) des ersten vorstehenden Abschnitts (111).

4. Form für den Kohlefaserverbundstoff nach einem der Ansprüche 1-3, bei welcher die Rahmenform (120) einen Fließkanal (127) hat, wobei mindestens eine Abflussöffnung (123) an der Innenwand (121) der Rahmenform (120) angeordnet ist, und wobei der Fließkanal (127) mit der mindestens einen Abflussöffnung (123) verbunden ist.

5. Form für den Kohlefaserverbundstoff nach Anspruch 4, bei welcher der Fließkanal (127) bezogen auf eine Bodenfläche (120b) der Rahmenform (120) niedriger ist als jede der mindestens einen Abflussöffnungen (123).

6. Form für den Kohlefaserverbundstoff nach Anspruch 5, bei welcher mindestens eine Entleerungsöffnung an einer Außenwand der Rahmenform (120) angeordnet ist, und wobei der Fließkanal (127) mit jeder der mindestens einen Entleerungsöffnung verbunden ist.

7. Form (100) für einen Kohlefaserverbundstoff nach Anspruch 1, bei welcher die zweite Form (130) einen zweiten Flansch (130a) aufweist und
eine Bodenfläche (120b) der Rahmenform (120) gegen den zweiten Flansch (130a) gedrückt wird.

8. Form für den Kohlefaserverbundstoff nach Anspruch 7, bei welcher die Sperrformen (140) eine gleiche Höhe (H₄) haben und die Höhe (H₄) der Sperrformen (140) kleiner ist als die Überstandsweite (H₁) des ersten vorstehenden Abschnitts (111).

9. Form für den Kohlefaserverbundstoff nach Anspruch 8, bei welcher eine Dicke (T) des Kohlefaserverbundstoffs gleich der Höhe (H₄) von jeder der Sperrformen (140) ist.

10. Form für den Kohlefaserverbundstoff nach einem der Ansprüche 7-9, bei welcher die Rahmenform (120) einen Fließkanal (127) hat, wobei mindestens eine Abflussöffnung (123) an der Innenwand (121) der Rahmenform (120) angeordnet ist, und wobei der Fließkanal (127) mit der mindestens einen Abflussöffnung (123) verbunden ist.

11. Form für den Kohlefaserverbundstoff nach Anspruch 10, bei welcher der Fließkanal (127) bezogen auf die Bodenfläche (120b) der Rahmenform (120) niedriger ist als jede der mindestens einen Abflussöffnung (123).

12. Form für den Kohlefaserverbundstoff nach Anspruch 11, bei welcher die Überstandsweite (H₃) des zweiten vorstehenden Abschnitts (131) bezogen auf die Bodenfläche (120b) der Rahmenform (120) geringer ist als eine Höhe von jeder der mindestens einen Abflussöffnung (123).

## Revendications

1. Moule (100) pour un matériau composite en fibre de carbone, configuré pour fabriquer le matériau composite en fibre de carbone, dans lequel le moule (100) comprend :
un premier moule (110), présentant un premier rebord (110a) et une première partie saillante (111) ;
un second moule (130), présentant une seconde partie saillante (131) ;
un moule de structure (120), disposé entre le premier moule (110) et le second moule (130), un espace fermé (120c) est défini par le moule de structure (120), la première partie saillante (111) et la seconde partie saillante (131) font saillie dans l'espace fermé (120c), et une surface de la première partie saillante (111) et une surface de la seconde partie saillante (131) sont en contact avec une paroi interne (121) du moule de structure (120), dans lequel une somme d'une distance en saillie (H₁) de la première partie saillante (111) et d'une distance entre saillie (H₃) de la seconde partie saillante (131) est égale à une hauteur (H₂) du moule de structure (120) et
une pluralité de moules d'arrêt (140), disposés entre le premier moule (110) et le moule de structure (120), dans lequel les moules d'arrêt (140) sont pressés contre le premier rebord (110a) et une surface supérieure (120a) du moule de structure (120), et
dans lequel le premier moule (110), le second moule (130) et le moule de structure (120) définissent un espace de moulage et l'espace de moulage est configuré pour contenir au moins un matériau préimprégné en fibre de carbone.

2. Moule pour le matériau composite en fibre de carbone selon la revendication 1, dans lequel les moules d'arrêt (140) présentent une même hauteur (H₄).

3. Moule pour le matériau composite en fibre de carbone selon la revendication 2, dans lequel une hauteur (H₄) des moules d'arrêt (140) est inférieure à une distance en saillie (H₁) de la première partie saillante (111).

4. Moule pour le matériau composite en fibre de carbone selon l'une quelconque des revendications 1-3, dans lequel le moule de structure (120) présente un canal d'écoulement (127), au moins une ouverture de vidange (123) est disposée sur la paroi interne (121) du moule de structure (120), et le canal d'écoulement (127) est raccordé à la au moins une ouverture de vidange (123).

5. Moule pour le matériau composite en fibre de carbone selon la revendication 4, dans lequel le canal d'écoulement (127) est plus bas que chacune de la au moins une ouverture de vidange (123) sur la base d'une surface de fond (120b) du moule de structure (120).

6. Moule pour le matériau composite en fibre de carbone selon la revendication 5, dans lequel au moins une ouverture d'évacuation est disposée sur une paroi externe du moule de structure (120), et le canal d'écoulement (127) est raccordé à chacune de la au moins une ouverture d'évacuation.

7. Moule (100) pour un matériau composite en fibre de carbone selon la revendication 1, dans lequel le second moule (130) présente un second rebord (130a) et une surface de fond (120b) du moule de structure (120) est pressée contre le second rebord (130a).

8. Moule pour le matériau composite en fibre de carbone selon la revendication 7, dans lequel les moules d'arrêt (140) présentent une même hauteur (H₄), et la hauteur (H₄) des moules d'arrêt (140) est inférieure à la distance en saillie (H₁) de la première partie saillante (111).

9. Moule pour le matériau composite en fibre de carbone selon la revendication 8, dans lequel une épaisseur (T) du matériau composite en fibre de carbone est égale à la hauteur (H₄) de chacun des moules d'arrêt (140).

10. Moule pour le matériau composite en fibre de carbone selon l'une quelconque des revendications 7-9, dans lequel le moule de structure (120) présente un canal d'écoulement (127), au moins une ouverture de vidange (123) est disposée sur la paroi interne (121) du moule de structure (120), et le canal d'écoulement (127) est raccordé à la au moins une ouverture de vidange (123).

11. Moule pour le matériau composite en fibre de carbone selon la revendication 10, dans lequel le canal d'écoulement (127) est plus bas que chacune de la au moins une ouverture de vidange (123) sur la base de la surface de fond (120b) du moule de structure (120).

12. Moule pour le matériau composite en fibre de carbone selon la revendication 11, dans lequel la distance en saillie (Hs) de la seconde partie saillante (131) est inférieure à une hauteur de chacune de la au moins une ouverture de vidange (123) sur la base de la surface de fond (120b) du moule de structure (120).
